# EUROPÄISCHE PATENTANMELDUNG

(11) **EP 4 485 846 A1**
(43) Veröffentlichungstag der Anmeldung: **01.01.2025**
(21) Anmeldenummer: 23182421.0
(22) Anmeldetag: 29.06.2023
(51) Int. Cl.: H04L 9/32

(54) **ÜBERPRÜFUNG EINES DIGITALEN ZERTIFIKATS**

(71) Anmelder: Siemens Aktiengesellschaft, 80333 München (DE)
(72) Erfinder: Fries, Steffen, 85598 Baldham (DE); Güttinger, Andreas, 90765 Fürth (DE); Lambio, Marco, 90552 Röthenbach a. d. Pegnitz (DE)
(74) Vertreter: Siemens Patent Attorneys

(57) **Zusammenfassung**

Beschrieben ist eine Überprüfungsvorrichtung (1) zur Überprüfung eines digitalen Zertifikats, aufweisend: einen digitalen Eingang (2), der ausgebildet ist, um zumindest ein digitales Nutzerzertifikat (3) zu erhalten; einen elektronischen Speicher (4), der ausgebildet ist, eine Datenstruktur (5) zu speichern; und einen Prozessor (6), der ausgebildet ist: das Nutzerzertifikat (3) zu überprüfen und in dem Speicher (4) einen Nutzerzertifikat bezogenen Datensatz (7) in der Datenstruktur (5) zur zukünftigen Überprüfung des Nutzerzertifikat anzulegen und/oder auf einen angelegten Nutzerzertifikat bezogenen Datensatz (7) der Datenstruktur (5) zur aktuellen Überprüfung des Nutzerzertifikat (3) zuzugreifen und das Nutzerzertifikat mithilfe des Nutzerzertifikat bezogenen Datensatzes (7) zu überprüfen, wobei der Nutzerzertifikat (3) bezogene Datensatz (7) zumindest teilweise über einen Identifikator (8) identifizierbar ist.

## Beschreibung

Unabhängig vom grammatikalischen Geschlecht eines bestimmten Begriffes sind Personen mit männlicher, weiblicher oder anderer Geschlechteridentität mit umfasst.

### GEBIET DER ERFINDUNG

Die vorliegende Erfindung betrifft eine Überprüfungsvorrichtung zur Überprüfung eines digitalen Zertifikats, betrifft ferner ein Feldgerät mit einer Überprüfungsvorrichtung und betrifft ferner ein Überprüfungsverfahren zum Überprüfen eines digitalen Zertifikats, sowie ein Computerprogrammprodukt, welches Anweisungen enthält, die ausgebildet sind, wenn sie von einer Rechenmaschine oder einem Computer ausgeführt sind, ein Verfahren eines Überprüfens eines digitalen Zertifikats auszuführen oder zu steuern.

### STAND DER TECHNIK

Mit Hilfe eines asymmetrischen Kryptosystems, beispielsweise unter Nutzung einer Public Key Infrastructure (PKI), kann ein digitales Zertifikat zusammen mit dem zugehörigen privaten Schlüssel zur Überprüfung der Echtheit bzw. der Identität eines Gerätes verwendet werden. Ein solches Zertifikat wird üblicherweise als Gerätezertifikat bezeichnet. Ein digitales Zertifikat kann des Weiteren zur Authentisierung eines Kommunikationspartners und/oder zur Verschlüsselung von ausgetauschten Nachrichten verwendet werden. So können Nachrichten in einem Netzwerk digital signiert und/oder verschlüsselt werden. Ein Sender (z.B. Gerät) der Nachricht benötigt für eine verschlüsselte Übermittlung den öffentlichen Schlüssel des Empfängers. Der Sender erhält diesen öffentlichen Schlüssel üblicherweise über ein digitales Zertifikat des Empfängers (z.B. Gerät), das Angaben zur Identität des Empfängers, seinen zulässigen Anwendungs- und Geltungsbereich und den öffentlichen Schlüssel des Empfängers enthält. Das digitale Zertifikat selbst ist durch eine digitale Signatur geschützt, deren Echtheit mit dem öffentlichen Schlüssel des Ausstellers des Zertifikats geprüft werden kann.

Um die Authentizität das Ausstellerschlüssels zu prüfen, wird wiederum ein digitales Zertifikat benötigt. Auf diese Weise lässt sich eine Kette (oder ein Pfad) von digitalen Zertifikaten aufbauen, die jeweils die Integrität und Authentizität des öffentlichen Schlüssels bestätigen, mit dem das vorhergehende Zertifikat überprüft werden kann. Eine solche Kette von Zertifikaten wird im Weiteren als Zertifikatspfad bezeichnet. Auf die Echtheit des letzten, als Wurzelzertifikat bezeichneten Zertifikates müssen sich die Kommunikationspartner ohne ein weiteres Zertifikat verlassen können. Bei der Prüfung der Authentizität eines Zertifikates ist es daher notwendig, nicht nur das Zertifikat an sich zu prüfen, sondern auch den Pfad des Zertifikats bis zum Wurzelzertifikat, das beim Überprüfer schon vorliegen muss, zu verifizieren. Dies wird auch als Zertifikatspfad-Validierung bezeichnet.

Der Zertifikatspfad, also eine Kette von jeweils die Signatur des vorhergehenden Zertifikats bestätigenden Zertifikaten, kann auf verschiedene Arten beim Überprüfer gebildet werden. So sind Sicherheitsprotokolle, wie beispielsweise das Transportschicht-Sicherheitsprotokoll (TLS), bekannt, bei denen der komplette Zertifikatspfad als Teil des Nachrichtenaustauschs mitgeschickt werden kann.

X.509 Zertifikate und korrespondierende private Schlüssel werden zunehmend auch in industrieller Kommunikation genutzt, um eine Geräte- oder Peer-Authentisierung durchzuführen. Daneben werden sie auch zur Autorisierung und im Key Management bei der Aushandlung von Session Keys genutzt. Im Gegensatz zum Webumfeld erfolgt im industriellen Bereich die Authentisierung mittels Zertifikate oft beiderseitig. Dabei wird nicht nur geprüft, ob ein Zertifikat zur Authentisierung genutzt werden konnte, sondern auch, ob das Zertifikat selbst gültig war zum Zeitpunkt der Nutzung. Zur Prüfung der Gültigkeit gehört dabei das (Geräte/Peer-) Zertifikat selbst, aber auch alle Zertifikate bis zum Vertrauensanker. Diese Überprüfung kann je nach Zertifikatspfadlänge einige Zeit in Anspruch nehmen. Neben den Daten im Zertifikat, wie z.B. der Gültigkeitszeitraum, betrifft dies auch den Revokationsstatus (Revocation State) der Zertifikate. Dieser wird unabhängig vom Zertifikat bereitgestellt und ist ebenfalls signiert, und muss entsprechend geprüft werden. Dies betrifft typischerweise das Zertifikat des Kommunikationspartners, kann aber ebenso für das eigene Zertifikat genutzt werden.

Je nach Nutzung von Zertifikaten, z.B. im Kontext der Aushandlung einer TLS Kommunikationssession oder basierend zum Schutz von einzelnen Nachrichten (email, S/MIME), müssen Zertifikate geprüft werden. Abhängig davon, kann eine solche Überprüfung damit mehrfach nacheinander vorkommen.

Ein Standard-Algorithmus zur Zertifikatspfadvalidierung ist in RFC5280 Abschnitt 6 beschrieben, siehe https://tools.ietf.org/html/rfc5280. Eine Variante ist in RFC6818 beschrieben, siehe https://tools.ietf.org/html/rfc6818 . Daneben kann es spezifische Anpassungen abhängig vom Anwendungsfall geben, z.B. wie spezielle Zertifikatserweiterungen zu prüfen sind oder welche Überprüfungen an Komponenten des Zertifikates (z.B. Subject) durchzuführen sind.

Aus dem Stand der Technik sind verschiedene Optimierungen bekannt:
CRL Caching: Ist ein Vorgehen das wiederholte Anfordern von Certificate Revocation Lists (CRLs) von einem CRL Distribution Point (die Adresse ist Teil des Zertifikats) zu vermeiden. Wie Zertifikate haben auch CRLs eine Lebenszeit und bis zu deren Ende können sie auf einem Gerät oder in einer Applikation gecacht werden (entweder im Arbeitsspeicher, im Zertifikatsstore oder auch als Datei auf der Festplatte). Siehe auch https://windoh.wordpress.com/2011/04/23/crl-caching-inwindows-and-a-little-bit-about-ocsp-caching-too/ OCSP Caching: Online Certificate Status Protocol (OCSP, RFC 6960) ermöglicht die Überprüfung des Revocation States eines einzelnen Zertifikates. Dabei wird eine Anfrage an einen OCSP Responder geschickt, der dann eine entsprechende Antwort bereitstellt. OCSP Responses enthalten, wie auch CRLs, eine Gültigkeitsangabe und können bis zu dieser gecacht werden, bevor eine neue OCSP Response angefordert wird.

Certificate Pinning: Ermöglicht das Festlegen auf ein spezifisches Zertifikat. Dieses Zertifikat kann ein End Entity Zertifikat sein oder aber ein Zertifikat aus der Zertifizierungskette. Durch ein Pinnen auf ein Zertifikat, das in der Kette vor dem eigentlichen Trust Anchor liegt, kann die Überprüfung des Zertifikatspfades optimiert werden. Bei HTTP Public Key Pinning, https://en.wikipedia.org/wiki/HTTP_Public_Key_Pinning , RFC7469 https://tools.ietf.org/html/rfc7469, übermittelt ein HTTP-Server eine Liste von für seine Domain zulässigen Public Keys / Zertifikaten die sich ein Client für eine bestimmte Zeit merken kann.

Von Implementierungen sind zahlreiche Optimierungen für die Zertifikatsprüfung bekannt. OpenSSL (https://www.openssl.org/docs/man3.0/man1/openssl-verification-options.html) ist hier als Beispiel genannt mit folgenden Optimierungen:
EP 3 681 102 A1 offenbart ein Verfahren zur Validierung eines digitalen Nutzerzertifikats, wobei das Nutzerzertifikat anhand einer Zertifikatspfad-Positivliste überprüft wird.

Die Verfahren des Standes der Technik sind jedoch häufig komplex und erfordern erhebliche Ressourcen und Fähigkeiten eines ausführenden Gerätes. Damit sind derartige Verfahren nicht für alle möglichen Geräte oder Anwendungen anwendbar oder durchführbar.

Es ist somit eine Aufgabe der vorliegenden Erfindung, eine Überprüfungsvorrichtung, ein Feldgerät sowie ein Überprüfungsverfahren bereitzustellen, wobei eine Überprüfung eines digitalen Zertifikats mit geringem erforderlichen Aufwand oder geringen erforderlichen Ressourcen und in einfacherer Weise durchgeführt werden kann.

### ZUSAMMENFASSUNG DER ERFINDUNG

Gemäß einer Ausführungsform der vorliegenden Erfindung ist eine Überprüfungsvorrichtung zur Überprüfung eines digitalen Zertifikats bereitgestellt, aufweisend: einen Eingang, der ausgebildet ist, um zumindest ein digitales Nutzerzertifikat zu erhalten; einen elektronischen Speicher, der ausgebildet ist, eine Datenstruktur zu speichern; und einen Prozessor, der ausgebildet ist: das Nutzerzertifikat zu überprüfen und in dem Speicher einen Nutzerzertifikat bezogenen Datensatz in der Datenstruktur zur zukünftigen Überprüfung des Nutzerzertifikats anzulegen und/oder auf einen angelegten Nutzerzertifikat bezogenen Datensatz der Datenstruktur zur aktuellen Überprüfung des Nutzerzertifikats zuzugreifen und das Nutzerzertifikat mithilfe des Nutzerzertifikat bezogenen Datensatzes zu überprüfen, wobei der Nutzerzertifikat bezogene Datensatz zumindest teilweise über einen Identifikator identifizierbar ist.

Die Überprüfungsvorrichtung kann zum Beispiel ein Teil eines Gerätes, insbesondere Feldgerätes, weiter insbesondere ein Teil eines Schutzgerätes sein. Die Überprüfungsvorrichtung kann teilweise in Software und teilweise in Hardware implementiert sein. Der digitale Eingang kann einen optischen oder einen elektronischen Eingang umfassen. Das Nutzerzertifikat kann zum Beispiel ein X.509-Zertifikat umfassen oder als ein solches ausgebildet sein.

Die Ausdrücke "Nutzer" und "Nutzervorrichtung" werden in diesem Dokument als Synonyme verwendet. Nutzer oder Nutzervorrichtung bezeichnet diejenige Einheit, für die das digitale Nutzerzertifikat ausgestellt wurde bzw. die im Nutzerzertifikat als Eigentümer oder "subject" oder im "subjectAltName" eingetragen ist. Als Überprüfungsvorrichtung wird die Vorrichtung bezeichnet, die das Nutzerzertifikat auf Gültigkeit überprüft.

Bei der Verwendung eines Nutzerzertifikats beim Aufbau einer Kommunikationsverbindung wird ein erster Kommunikationspartner, umfassend ein Applikationsprotokoll, das bei der Authentisierung über ein Netzwerkprotokoll sein Nutzerzertifikat zur Authentisierung an den zweiten Kommunikationspartner übermittelt, als Nutzer bezeichnet. Der zweite Kommunikationspartner wird als Überprüfungsvorrichtung bezeichnet. Ein Nutzer kann aber auch ein Gerät selbst sein, das seine Authentizität beispielsweise bei einer Plagiatsprüfung einer Überprüfungseinheit übermittelt beziehungsweise bereitstellt. Ein Nutzer kann aber auch beispielsweise der Nutzer einer Chipkarte sein, die zur Authentisierung oder Zugriffskontrolle ein digitales Zertifikat und den korrespondierenden privaten Schlüssel umfasst. In einem solchen Fall ist die Überprüfungsvorrichtung entsprechend ein Zugriffskontrollserver oder Authentisierungsserver.

Die Datenstruktur kann zum Beispiel in Form einer Tabelle als eine Hash-Datenstruktur oder eine andere objektorientierte oder nicht-objektorientierte Datenstruktur oder als Datenbanktabelle ausgebildet sein. Der Prozessor kann ausgebildet sein, arithmetische und/oder logische Operationen durchzuführen. Der Prozessor kann Zugriff auf den elektronischen Speicher haben, sowohl Lesezugriff als auch Schreibzugriff.

Bei einem erstmaligen Empfang des Nutzerzertifikats kann die Datenstruktur keinerlei Datensatz für dieses erstmalig erhaltene Nutzerzertifikat enthalten. In diesem Fall kann das Nutzerzertifikat erstmalig überprüft werden, wobei herkömmliche Verfahren angewendet werden können. Dabei kann sowohl der Inhalt des Nutzerzertifikats als auch das Gültigkeitsenddatum als auch der Revokationsstatus in herkömmlicher Weise überprüft werden.

Der Nutzerzertifikat bezogene Datensatz kann dann in der Datenstruktur, d.h. auch in dem elektronischen Speicher angelegt, gespeichert werden. Der Nutzerzertifikat bezogene Datensatz kann eine zukünftige Überprüfung des(selben) Nutzerzertifikats erleichtern. Der Nutzerzertifikat bezogene Datensatz kann angelegt sein, redundante Informationen zu unterdrücken, um auch die Speicherraumanforderungen in dem elektronischen Speicher zu begrenzen. Der Nutzerzertifikat bezogene Datensatz kann sowohl Datenteile umfassen, die das Nutzerzertifikat selbst betreffen als auch Datenteile, die etwaig vorhandene Ausstellerzertifikate betreffen, welche in einem Zertifikatspfad von einem Nutzerzertifikat zu dem Wurzelzertifikat enthalten sind, wie weiter unten im Detail ausgeführt wird.

Wenn das Nutzerzertifikat zu einem wiederholten Male empfangen wird, kann auf den bereits in der Datenstruktur angelegten Nutzerzertifikat bezogenen Datensatz zugegriffen werden und relevante Informationen ausgelesen werden, um mit Hilfe dieser relevanten Informationen das Nutzerzertifikat zu überprüfen, ohne alle konventionell durchgeführten Schritte tatsächlich durchführen zu müssen. Damit kann die Komplexität der Überprüfung vermindert werden, so dass auch Geräte oder Vorrichtungen, die nur relativ geringe Rechenkapazitäten oder Speicherkapazitäten oder auch Energiekapazitäten haben, eine Überprüfung in einfacher und rascher Weise durchführen zu können.

Der Identifikator des zu überprüfenden Zertifikates kann in verschiedenen Ausführungsformen zum Beispiel den Subjektnamen des Nutzerzertifikates oder einen Hash-Wert (auch Fingerabdruck) des Nutzerzertifikats umfassen.

Gemäß einer Ausführungsform der vorliegenden Erfindung ist die Überprüfungsvorrichtung derart ausgebildet, dass der Nutzerzertifikat bezogene Datensatz einen Nutzerzertifikat bezogenen Eintrag aufweist, der über einen Identifikator des Nutzerzertifikates auswählbar ist und einen Wert für zumindest eines der folgenden Felder aufweist: ein Revokationsstatusaktualisierungsdatum des Nutzerzertifikats; ein Gültigkeitsenddatum des Nutzerzertifikats; ein Überprüfungsergebnis von Signatur und/oder Erweiterungen des Nutzerzertifikats.

Der Nutzerzertifikat bezogene Eintrag kann zum Beispiel Werte (oder keine Werte) für mehrere Felder aufweisen und kann somit als eine Zeile in einer Tabelle aufgefasst oder implementiert werden. Die Werte für die Felder können zum Beispiel bei der ersten Überprüfung des Nutzerzertifikats ermittelt und dann in der Datenstruktur gespeichert werden. Das Revokationsstatusaktualisierungsdatum kann zum Beispiel durch Zugriff auf in einem elektronischen Kommunikationsnetzwerk (z.B. Internet) zugreifbare Ressourcen erhalten werden. Es kann zum Beispiel durch Anfordern und Erhalten von Zertifikatsrevokationslisten oder durch spezifische Anfrage des Revokationsstatus des jeweils betrachteten Nutzerzertifikats von einer anderen Netzwerkressource erhalten werden. Eine Zertifikatsrevokationsliste kann zum Beispiel von einem entsprechenden Verteilungspunkt in konventioneller Weise erhalten werden. Um den individuellen Revokationsstatus des betrachteten Nutzerzertifikats zu erhalten, kann zum Beispiel als "online certificate status protocol" (OCSP) angewendet werden.

Das Gültigkeitsenddatum kann direkt aus dem überprüften Zertifikat bei der ersten Überprüfung ausgelesen werden und entsprechend in der Tabelle eingetragen werden.

Das Anlegen zumindest eines oder einiger Werte für die oben aufgeführten Felder kann eine zukünftige Überprüfung des Nutzerzertifikats bei wiederholtem Erhalten erleichtern.

Gemäß einer Ausführungsform der vorliegenden Erfindung ist die Überprüfungsvorrichtung ferner ausgebildet, dass ein Nutzerzertifikat bezogener Datensatz einen Satz von einem oder mehreren Ausstellern bezogenen Einträgen aufweist, der bzw. die ein oder mehrere Ausstellerzertifikate eines Zertifikatspfades des Nutzerzertifikats betreffen, wobei ein Aussteller bezogener Eintrag einen Wert für zumindest eines der folgenden Felder aufweist: einen digitalen Fingerabdruck des Ausstellerzertifikats; ein Revokationsstatusaktualisierungsdatum des Ausstellerzertifikats; ein Gültigkeitsenddatum des Ausstellerzertifikats; ein Überprüfungsergebnis von Signatur und/oder Erweiterungen des Ausstellerzertifikats. Die in der Datenstruktur gespeicherten Informationen zu den Ausstellerzertifikaten können für mehrere Nutzerzertifikate gültig sein. Dies kann insbesondere dann der Fall sein, wenn die Nutzer unter derselben administrativen Kontrolle sind.

Der Nutzerzertifikat bezogene Datensatz kann zum Beispiel für jedes Ausstellerzertifikat in dem Zertifikatspfad (welcher von dem Nutzerzertifikat zu einem Wurzelzertifikat reicht) einen entsprechenden Aussteller bezogenen Eintrag (z.B. eine Zeile in der oben erwähnten Tabelle) aufweisen. Dabei muss der Eintrag nicht für alle Felder einen Wert aufweisen, was somit die erforderlichen Speicherressourcen begrenzt. Werte können zum Beispiel ausgelassen werden, wenn der Wert ein Ablaufdatum spezifizieren würde, welches nach einem Ablaufdatum liegt, welches durch einen Wert eines anderen Feldes gegeben ist.

Wenn die Datenstruktur auch Aussteller bezogene Einträge oder zumindest einen Aussteller bezogenen Eintrag umfasst, kann das Nutzerzertifikat vollständig unter Betrachtung aller Zertifikate in dem Zertifikatspfad (außer dem Wurzelzertifikat) zuverlässig überprüft werden.

Das Überprüfungsergebnis von Komponenten und Signatur und/oder Erweiterungen des Nutzerzertifikats bzw. eines Ausstellerzertifikats betrifft nur das Ergebnis, welches durch Überprüfung des in dem Zertifikatspfad unmittelbar höherrangig angeordneten Zertifikats betrifft. In der Datenstruktur kann das Überprüfungsergebnis eines Zertifikates binär dargestellt werden. Zum Beispiel kann eine positive Überprüfung (Überprüfung der Komponenten des Zertifikates (z.B. Name im Subject (im einfachsten Fall ein Vergleich)), der Gültigkeit des Zertifikates sowie der digitalen Signatur, im einfachsten Fall ohne Erweiterungen) mit einer "1" gekennzeichnet werden. Eine negative Überprüfung kann mit einer "0" gekennzeichnet werden.

Gemäß einer Ausführungsform der vorliegenden Erfindung ist die Überprüfungsvorrichtung derart ausgebildet, dass der Identifikator für den Nutzerzertifikat bezogenen Eintrag und/oder den Aussteller bezogenen Eintrag den digitalen Fingerabdruck des jeweiligen Zertifikats aufweist, wobei der digitale Fingerabdruck insbesondere mithilfe eines Hashalgorithmus (z.B. SHA-1, SHA-256, AES-GMAC, Poly1305) berechnet wird.

Der digitale Fingerabdruck kann unter erheblich geringerem Aufwand berechnet werden als die herkömmliche Verifikation der digitalen Signatur, welche eine aufwendige kryptografische Berechnung erfordert. Der Fingerabdruck kann vorteilhafterweise in der Datenstruktur (insbesondere Tabelle) als Look-Up (d.h. zum gezielten Zugreifen) für das betreffende Nutzerzertifikat benutzt werden bzw. auch für das Ausstellerzertifikat benutzt werden.

Bei der Berechnung des Fingerabdrucks können darüber hinaus potentielle Änderungen eines Zertifikats als solches festgestellt werden. Ein bereits vorher erhaltenes Nutzerzertifikat würde in diesem Fall als ein neues und nicht bereits in der Vergangenheit erhaltenes Nutzerzertifikat erkannt werden und ein entsprechender neuer Datensatz würde für dieses (veränderte) Nutzerzertifikat in der Tabelle angelegt werden inklusive der Überprüfungsschritte wie oben ausgeführt. Daher kann es besonders vorteilhaft sein, den Fingerabdruck anstatt zum Beispiel des Zertifikatsnamens als einen Identifikator des Zertifikats innerhalb der Datenstruktur zu nutzen.

Gemäß einer Ausführungsform der vorliegenden Erfindung ist die Überprüfungsvorrichtung derart ausgebildet, dass nach Erhalten des Nutzerzertifikats zumindest eines der Folgenden ausgeführt wird: Berechnen des digitalen Fingerabdruckes; Abfragen der Datenstruktur basierend auf dem Fingerabdruck; bei erfolgreicher Abfrage: Abrufen des Nutzerzertifikat bezogenen Datensatzes und Überprüfen des Nutzerzertifikats mithilfe des Nutzerzertifikat bezogenen Datensatzes; bei nicht erfolgreicher Abfrage: Überprüfen des Nutzerzertifikats; Anlegen des Nutzerzertifikat bezogenen Datensatzes in der Datenstruktur.

Je nachdem ob zum Beispiel der digitale Fingerabdruck des erhaltenen Nutzerzertifikats bereits in der Datenstruktur aufgefunden wird oder nicht, führt die Überprüfungsvorrichtung somit verschiedene Schritte aus. Vorteile ergeben sich in dem Fall, in dem der Fingerabdruck des erhaltenen Nutzerzertifikats bereits in der Datenstruktur aufgefunden wird und auf den Nutzerzertifikat bezogenen Datensatz zugegriffen wird, um diesen für eine Überprüfung zu nutzen. Das Anlegen des Nutzerzertifikat bezogenen Datensatzes bei erstmaligem Auftreten des Fingerabdruckes des Nutzerzertifikats kann dabei zukünftige Überprüfungen erleichtern oder beschleunigen.

Miteinander kommunizierende Geräte können auch bei kontinuierlich anhaltender Kommunikation häufig Überprüfungen der jeweiligen Zertifikate durchführen, was in Ausführungsformen der vorliegenden Erfindung erleichtert und beschleunigt werden kann.

Gemäß einer Ausführungsform der vorliegenden Erfindung ist die Überprüfungsvorrichtung derart ausgebildet, dass beim Anlegen des Nutzerzertifikat bezogenen Eintrags und/oder eines Ausstellerzertifikat bezogenen Eintrags: kein Wert für das Gültigkeitsenddatum des jeweiligen Zertifikats gespeichert wird und der Wert für das Revokationsstatusaktualisierungsdatum des jeweiligen Zertifikats gespeichert wird, falls das Revokationsstatusaktualisierungsdatum des jeweiligen Zertifikats früher ist als das Gültigkeitsendedatum des jeweiligen Zertifikats; und/oder kein Wert für das Revokationsstatusaktualisierungsdatum des jeweiligen Zertifikats gespeichert wird und der Wert für das Gültigkeitsendedatum des jeweiligen Zertifikats gespeichert wird, falls das Revokationsstatusaktualisierungsdatum des jeweiligen Zertifikats später ist als oder gleich ist wie das Gültigkeitsendedatum des jeweiligen Zertifikats.

Wenn zum Beispiel kein Wert für das Gültigkeitsendedatum oder kein Wert für das Revokationsstatusaktualisierungsdatum eingetragen ist, muss dieser Wert auch nicht bei einer zukünftigen Überprüfung ausgelesen und zur Überprüfung verwendet werden. Damit kann die Logik des Überprüfens vereinfacht werden und die benötigten Ressourcen gering gehalten werden. Vergleichsoperationen brauchen somit nicht erforderlich sein. Durch die gezielte Speicherung von nur relevanten Informationen kann damit auch Speicherplatz eingespart werden.

Gemäß einer Ausführungsform der vorliegenden Erfindung ist die Überprüfungsvorrichtung derart ausgebildet, dass beim Anlegen des Nutzerzertifikat bezogenen Eintrags zumindest einer der folgenden Schritte ausgeführt wird: Verifizieren der Ausstellersignatur; Verifizieren des Zertifikatinhalts; Erhalten von Revokationsinformationen mit Revokationsstatusaktualisierungsdatum; Verifizieren des Revokationsstatusinformation (umfassend z.B. Datum, wann neue Revoktaionsinformation eingeholt werden muss), Speichern eines Wertes für den Fingerabdruck des Nutzerzertifikates; Speichern des Wertes für das Revokationsstatusaktualisierungsdatum, falls dieses früher ist als das Gültigkeitsenddatum des Nutzerzertifikats; Speichern des Gültigkeitsendedatums des Nutzerzertifikats, falls diese früher ist als das Revokationsstatusaktualisierungsdatum; Speichern des Verifikationsergebnisses. Die Schritte können insbesondere alle zusammen wie in der Reihenfolge angegeben ausgeführt werden.

Das im Datensatz gespeicherte Verifikationsergebnis umfasst eine Aussage zur erfolgreichen Überprüfung der Felder des Zertifikates (wie z.B. der Name ("Subject"), der Gültigkeitszeitraum, das Vorhandensein bestimmter Erweiterungen im Zertifikat (z.B., ob das Zertifikat zur Authentisierung genutzt werden darf oder auch zur Erstellung von Digitalen Signaturen oder im Kontext einer Schlüsselaushandlung).

Weiterhin umfasst das Verifikationsergebnis die Überprüfung der digitalen Signatur des Nutzerzertifikates (oder auch des Ausstellerzertifikates). Die Überprüfung der Signatur des Zertifikates wird unter Nutzung des öffentlichen Schlüssels im Austellerzertifikates (das "nächste" Zertifikat im Zertifizierungspfad) des aktuell verifizierten Zertifikates durchgeführt. Die dazu notwendigen mathematischen Operationen sind abhängig vom genutzten Signaturalgorithmus (z.B. RSA, ECDSA, oder auch XMSS, Falcon) und bekannt. Die letzte Überprüfung in der Zertifizierungskette wird typischerweise gegen einen lokal gespeicherten Vertrauensanker (auch Wurzelzertifikat genannt) vorgenommen. Eine erfolgreiche Überprüfung der Komponenten eines Zertifikates inklusive der digitalen Signatur kann im Verifikationsergebnis mit dem Binärwert "1" gekennzeichnet werden. Eine nicht erfolgreiche Überprüfung kann mit "0" gekennzeichnet werden.

Gemäß einer Ausführungsform der vorliegenden Erfindung ist die Überprüfungsvorrichtung derartig ausgebildet, dass das Überprüfen des Nutzerzertifikats mithilfe des Nutzerzertifikat bezogenen Datensatzes zumindest eines der Folgenden umfasst: Überprüfen, ob ein Wert für das Revokationsstatusaktualisierungsdatum in dem Nutzerzertifikat bezogenen Eintrag enthalten ist; falls ein Wert für das Revokationsstatusaktualisierungsdatum in dem Nutzerzertifikat bezogenen Eintrag enthalten ist, Überprüfen, ob die momentane (aktuelle) Zeit früher ist als der Wert für das Revokationsstatusaktualisierungsdatum; falls die momentane Zeit früher ist als der Wert für das Revokationsstatusaktualisierungsdatum, Bestätigung der positiven Überprüfung des Nutzerzertifikats, wobei diese Schritte insbesondere für jedes Ausstellerzertifikat in dem Zertifikatspfad durchgeführt werden, wobei das Nutzerzertifikat positiv überprüft bestätigt wird, falls auch alle Ausstellerzertifikate positiv überprüft bestätigt sind.

Damit kann eine zuverlässige Überprüfung durchgeführt werden, falls ein Wert für das Revokationsstatusaktualisierungsdatum in dem Nutzerzertifikat bezogenen Eintrag enthalten ist. In diesem Fall braucht kein Wert für das Gültigkeitsendedatum in dem Nutzerzertifikat bezogenen Eintrag enthalten sein oder in irgendeinem Ausstellerzertifikat bezogenen Eintrag. In dieser Ausführungsform wird vom PKI Schalenmodell ausgegangen, d.h., dass ein Austellerzertifikat nur Zertifikate im Rahmen der Gültigkeit des Ausstellerzertifikates ausstellen darf/kann.

In anderen Fällen kann jedoch zum Beispiel für den Nutzerzertifikat bezogenen Eintrag ein Wert für das Revokationsstatusaktualisierungsdatum enthalten sein aber für ein oder mehrere Ausstellerzertifikate kein Wert für das Revokationsstatusaktualisierungsdatum enthalten sein. Für jedes Zertifikat, d.h. ob Nutzerzertifikat oder Ausstellerzertifikat kann entweder ein Wert für das Revokationsstatusaktualisierungsdatum enthalten sein oder nicht enthalten sein. Dasselbe gilt für das Gültigkeitsendedatum.

Gemäß einer Ausführungsform der vorliegenden Erfindung ist die Überprüfungsvorrichtung derart ausgebildet, dass das Überprüfen des Nutzerzertifikats mithilfe des Nutzerzertifikat bezogenen Datensatzes zumindest eines der Folgenden umfasst: Überprüfen, ob ein Wert für das Revokationsstatusaktualisierungsdatum in dem Nutzerzertifikat bezogenen Eintrags enthalten ist; falls kein Wert für Revokationsstatusaktualisierungsdatum in dem Nutzerzertifikat bezogenen Eintrags enthalten ist: Abrufen des Wertes für das Gültigkeitsenddatum; Überprüfen, ob die momentane Zeit früher ist als der Wert für das Gültigkeitsenddatum; falls die momentane Zeit früher ist als der Wert für das Gültigkeitsenddatum, Bestätigung der positiven Überprüfung des Nutzerzertifikats, wobei diese Schritte insbesondere für jedes Ausstellerzertifikat in dem Zertifikatspfad durchgeführt werden, wobei das Nutzerzertifikats positiv überprüft bestätigt wird, falls auch alle Ausstellerzertifikate positiv überprüft bestätigt sind.

Für jedes Zertifikat, ob Nutzerzertifikat oder irgendein Ausstellerzertifikat, kann überprüft werden, ob ein Wert für das Revokationsstatusaktualisierungsdatum enthalten ist. Für jedes der Zertifikate, ob Nutzerzertifikat oder Ausstellerzertifikat, kann kein Wert oder es kann ein Wert für das Revokationsstatusaktualisierungsdatum enthalten sein. Dasselbe gilt für das Gültigkeitsenddatum. Damit ist die Überprüfung eines wiederholt erhaltenen Nutzerzertifikats vereinfacht und mit begrenzten Ressourcen bezüglich Rechenkapazität und/oder Speicher durchführbar.

Gemäß einer Ausführungsform der vorliegenden Erfindung weist ein von der Überprüfungsvorrichtung durchgeführtes Überprüfungsverfahren ferner auf insbesondere falls die momentane Zeit später ist als der Wert für das Revokationsstatusaktualisierungsdatum: Aktualisieren, insbesondere synchron oder asynchron, des Datensatzes für das Nutzerzertifikat und/oder das Austellerzertifikats in der Datenstruktur.

Das Aktualisieren kann zum Beispiel ein Aktualisieren des Revokationsstatus umfassen bzw. das Erhalten oder Abfragen von Revokationsstatusinformationen. Falls das betreffende Nutzerzertifikat oder eines der dem Nutzerzertifikat zugeordneten Ausstellerzertifikate in dem Zertifikatspfad in der aktuellen Revokationsinformation nicht widerrufen wurden, kann der Datensatz für das Nutzerzertifikat lediglich durch Neusetzen des nächsten Revokationsstatusaktualisierungsdatums aktualisiert werden. Dies geschieht jedoch nur dann, wenn das nächste Revokationsstatusaktualisierungsdatum früher ist als das jeweilige Gültigkeitsenddatum. Ist das nächste Revokationsstatusaktualierungsdatum jedoch später als ein betreffendes Gültigkeitsenddatum des Nutzerzertifikats oder irgendeines Ausstellerzertifikats, wird kein Wert für das aktualisierte Revokationsstatusaktualisierungsdatum für das betreffende Zertifikat gesetzt.

Wenn zum Beispiel das nächste Revokationsstatusaktulisierungsdatum später ist als ein entsprechendes Gültigkeitsenddatum des Nutzerzertifikats oder irgendeines Ausstellerzertifikats kann der Wert für das nächste Revokationsstatusaktualisierungsdatum gelöscht oder unterdrückt werden und lediglich ein Wert für das Gültigkeitsenddatum in der Tabelle belassen bzw. eingetragen werden.

Das Aktualisieren umfasst somit auch das Setzen bzw. Nichtsetzen eines Wertes des Revokationsstatusaktualisierungsdatums und/oder des Gültigkeitsenddatums, was für alle Zertifikate in den Zertifikatspfad (bis auf das Wurzelzertifikat) durchgeführt werden kann. Somit ist auch eine wiederholte nächste Überprüfung des schon zuvor erhaltenen Nutzerzertifikats in zuverlässiger und einfacher Weise ermöglicht.

Gemäß einer Ausführungsform der vorliegenden Erfindung ist die Überprüfungsvorrichtung derart ausgebildet, dass das Gültigkeitsenddatum angibt, bis zu welchem Datum das betreffende Zertifikat gültig ist, wobei das Revokationsstatusaktualisierungsdatum angibt, zu welchem Datum neue Revokationsinformationen erforderlich/einzuholen sind, wobei die Revokationsinformationen insbesondere über online Abfragen mittels OCSP und/oder über Anfordern einer CRL erhalten werden.

Damit können herkömmliche Zertifikate und auch herkömmlich verwendete Revokationsstatusaktualisierungsdaten unterstützt werden.

Gemäß einer Ausführungsform der vorliegenden Erfindung ist die Überprüfungsvorrichtung derart ausgebildet, dass das Nutzerzertifikat und/oder das Ausstellerzertifikat zumindest die folgenden Daten umfasst: Zertifikatsname (z.B. CN); Gültigkeitsinformation; öffentlicher Schlüssel; Ausstellersignatur, wobei insbesondere ein Zertifikat im Speicher gespeichert ist und kein Eintrag dafür in der Datenstruktur gespeichert ist, wobei das Nutzerzertifikat insbesondere ein X.509 Zertifikat umfasst. Ein Zertifikat kann weitere Informationen enthalten, wie z.B. Informationen zur Nutzung des enthaltenen öffentlichen Schlüssels.

Somit sind herkömmlich verwendete Zertifikate, insbesondere X.509 Zertifikate unterstützt. Auch andere Zertifikate können unterstützt werden. Beispiele für weitere gemäß Ausführungsformen der vorliegenden Erfindung unterstützte Zertifikatsformate sind IEEE 1609.2 für Car-to-Infrastructure Communication (https://standards.ieee.org/ieee/1609.2/10258/) oder auch IETF C.509 (https://datatracker.ietf.org/doc/draft-ietfcose-cbor-encoded-cert/) .

Gemäß einer Ausführungsform der vorliegenden Erfindung ist ein Feldgerät bereitgestellt, insbesondere Schutzgerät für ein Energieverteilungssystem, aufweisend eine Überprüfungsvorrichtung gemäß einer der vorangehend beschriebenen Ausführungsformen.

Das Schutzgerät kann zum Beispiel ein Schaltgerät zum Herstellen oder Unterbrechen einer elektrischen Verbindung zur elektrischen Energieübertragung eingerichtet sein. Damit kann das Feldgerät auch bei begrenzten Ressourcen hinsichtlich Rechenkapazität und/oder Speicherkapazität vorteilhaft und in zuverlässiger Weise elektronisch gesteuert werden, was eine Kommunikation einer oder mehreren anderen Geräten unter Austausch von Zertifikaten erfordern kann.

Es sollte verstanden werden, dass Merkmale, welche individuell oder in irgendeiner Kombination im Zusammenhang mit einer Überprüfungsvorrichtung zur Überprüfung eines digitalen Zertifikats erwähnt, erläutert oder angewendet worden sind, ebenso, individuell oder in irgendeiner Kombination, auf ein Überprüfungsverfahren zum Überprüfen eines digitalen Zertifikats angewendet werden können oder eingesetzt werden können gemäß Ausführungsformen der vorliegenden Erfindung.

Die Überprüfungsvorrichtung kann insbesondere ausgebildet sein, ein Überprüfungsverfahren gemäß einer Ausführungsform der vorliegenden Erfindung durchzuführen. Das Überprüfungsverfahren kann zum Beispiel teilweise oder vollständig von der Überprüfungsvorrichtung implementiert werden oder mit Hilfe der Überprüfungsvorrichtung implementiert werden.

Das digitale Nutzerzertifikat kann zum Beispiel von einem Gerät, insbesondere Feldgerät, erhalten werden. Neben dem Nutzerzertifikat kann das Feldgerät zum Beispiel auch andere Information oder Daten, insbesondere Steuerdaten, erhalten, welche zum Beispiel spezifizieren, ob eine elektrische Verbindung und wann eine elektrische Verbindung hergestellt bzw. unterbrochen werden soll.

Gemäß einer Ausführungsform der vorliegenden Erfindung ist ein Überprüfungsverfahren einer Überprüfung eines digitalen Zertifikats bereitgestellt, aufweisend: Erhalten zumindest eines digitalen Nutzerzertifikates; Überprüfen des Nutzerzertifikates und Anlegen eines Nutzerzertifikat bezogenen Datensatzes in einer Datenstruktur zur zukünftigen Überprüfung des Nutzerzertifikat und/oder Zugreifen auf einen angelegten Nutzerzertifikat bezogenen Datensatz zur aktuellen Überprüfung des Nutzerzertifikat und Überprüfen des Nutzerzertifikates mithilfe des Nutzerzertifikat bezogenen Datensatzes, wobei der Nutzerzertifikat bezogene Datensatz und/oder der Nutzerzertifikat bezogene Eintrag über einen Identifikator identifizierbar ist, wobei insbesondere die Datenstruktur in einem elektronischen Speicher einer Überprüfungsvorrichtung oder eines Feldgerätes gemäß einem der vorangehenden Ansprüche gespeichert ist.

Gemäß einer Ausführungsform der vorliegenden Erfindung ist ein Computerprogrammprodukt mit Anweisungen bereitgestellt, das ausgebildet ist, wenn von einem Prozessor ausgeführt, ein Überprüfungsverfahren gemäß dem vorangehenden Anspruch ausführen.

Ausführungsformen der vorliegenden Erfindung werden nun mit Bezug auf die beiliegenden Zeichnungen erläutert. Die Erfindung ist nicht auf die illustrierten oder beschriebenen Ausführungsformen beschränkt.

### KURZE BESCHREIBUNG DER ZEICHNUNGEN

Fig. 1 illustriert in schematischer Weise eine Überprüfungsvorrichtung zum Überprüfen eines digitalen Zertifikats gemäß einer Ausführungsform der vorliegenden Erfindung;
Fig. 2 illustriert ein Beispiel für eine Zertifikat-Hierarchie mit einem Zertifikatspfad;
Fig. 3 illustriert ein Ablaufdiagramm eines Teils eines Überprüfungsverfahrens gemäß einer Ausführungsform der vorliegenden Erfindung; und
Fig. 4 illustriert ein Ablaufdiagramm eines Teils eines Überprüfungsverfahrens gemäß einer Ausführungsform der vorliegenden Erfindung.

### DETAILLIERTE BESCHREIBUNG VON AUSFÜHRUNGSFORMEN

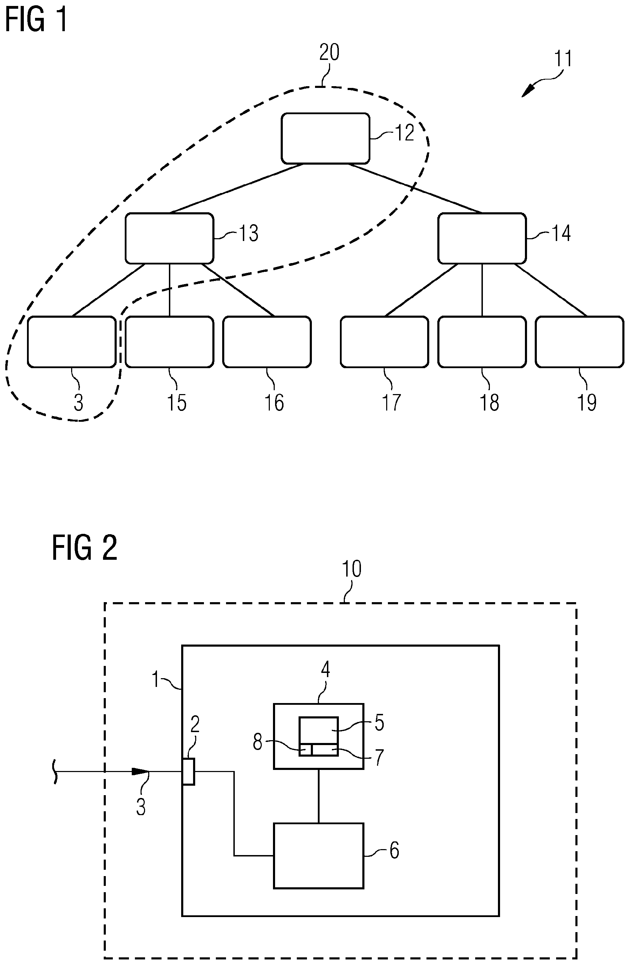

Die in **Fig. 1** in schematischer Weise illustrierte Überprüfungsvorrichtung 1 zur Überprüfung eines digitalen Zertifikats weist einen Eingang 2 auf, der ausgebildet ist, um zumindest ein digitales Nutzerzertifikat 3 zu erhalten. Die Vorrichtung 1 umfasst ferner einen elektronischen Speicher 4, der ausgebildet ist, eine Datenstruktur 5 zu speichern. Die Überprüfungsvorrichtung 1 umfasst ferner einen Prozessor 6, der ausgebildet ist, das Nutzerzertifikat 3 zu überprüfen und in dem Speicher 5 in der Datenstruktur 5 einen Nutzerzertifikat bezogenen Datensatz 7 zur zukünftigen Überprüfung des Nutzerzertifikats 3 anzulegen und/oder auf einen angelegten Nutzerzertifikat bezogenen Datensatz 7 zur aktuellen Überprüfung des Nutzerzertifikats zuzugreifen und das Nutzerzertifikat 3 mit Hilfe des Nutzerzertifikat bezogenen Datensatzes 7 zu überprüfen, wobei der Nutzerzertifikat bezogene Datensatz 7 zumindest teilweise über einen Identifikator 8 identifizierbar ist. In einer Ausführungsform ist die Überprüfungsvorrichtung 1 ein Teil eines Feldgerätes, insbesondere Schutzgerätes für ein Energieverteilungssystem 10.

Das digitale Zertifikat 3 kann zum Beispiel in einem asymmetrischen Kryptosystem zur Authentifizierung eines Nutzers durch die Überprüfungsvorrichtung 1 benötigt werden. Das digitale Zertifikat 3 umfasst zum Beispiel einen Zertifikatsnamen, eine Gültigkeitsinformation, Erweiterung zur Beschreibung der Schlüsselnutzung; einen öffentlichen Schlüssel sowie eine Ausstellersignatur. Durch die Ausstellersignatur ist das digitale Zertifikat 3 gegen nichtautorisierte Änderungen geschützt, wobei die Echtheit der digitalen Signatur mit dem öffentlichen Schlüssel der Ausstellerstelle des Zertifikats geprüft werden kann. Der öffentliche Schlüssel einer Ausstellungsstelle wird im Weiteren als Ausstellerschlüssel bezeichnet. Um die Authentizität des Ausstellerschlüssels, mit dem die digitale Signatur des Nutzerzertifikats 3 generiert wurde, zu überprüfen, wird wiederum ein digitales Zertifikat benötigt. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten wird als Zertifikatspfad bezeichnet. Auf die Echtheit des letzten Zertifikats, das als Wurzelzertifikat bezeichnet wird, müssen sich die Kommunikationspartner ohne ein weiteres Zertifikat verlassen. Das Wurzelzertifikat kann zum Beispiel ein selbst-signiertes Zertifikat sein.

**Fig. 2** zeigt ein Beispiel für einer Zertifikat-Hierarchie 11 mit einem Wurzelzertifikat 12, Ausstellerzertifikaten 13, 14 und Endzertifikaten 3, 15, 16, 17, 18, 19. Ein Zertifikatspfad 20 ist von dem Nutzerzertifikat 3, dem Ausstellungszertifikat 13 und dem Wurzelzertifikat 12 gebildet. Das Nutzerzertifikat 3 ist durch eine digitale Signatur geschützt, die durch den öffentlichen Schlüssel des Ausstellerzertifikats 13 überprüft werden kann. Das Ausstellerzertifikat 13 ist durch eine digitale Signatur geschützt, die durch den öffentlichen Schlüssel des Wurzelzertifikats 12 geprüft werden kann.

Ausführungsformen der vorliegenden Erfindung unterstützen die Überprüfung des Nutzerzertifikats 3 in zuverlässiger und einfacher Weise, wobei auch Ressourcen hinsichtlich erforderlicher Rechenkapazität und/oder Speicher begrenzt sind.

Ausführungsformen unterstützen die Überprüfung von Nutzerzertifikaten mit beliebig vielen Hierarchiestufen, d.h. einer oder mehrerer Ausstellerzertifikate in einem Zertifikatspfad, welcher bis zum Wurzelzertifikat führt.

Beispielhaft wird im Folgenden ein Beispiel erläutert, in dem nur ein Ausstellerzertifikat zwischen dem Nutzerzertifikat und dem Wurzelzertifikat liegt.

Eine Zertifikatsüberprüfung beinhaltet typischerweise verschiedene Schritte:
- Validierung der digitalen Signatur des Ausstellers
- Verifikation des Inhalts des Zertifikates, insbesondere der Gültigkeitsinformation
- Verifikation des Rückweisungsstatus des Zertifikates
- Verifikation der Zertifikate entlang der Zertifizierungskette, ausgehend vom Wurzelzertifikat.

Diese Überprüfung beinhaltet mehrere Verifikationen einer digitalen Signatur sowie einzelner Werte pro Zertifikat. Die Verifikation insbesondere der digitalen Signatur(en) wird über asymmetrische kryptografische Algorithmen erreicht, die je nach Plattform und Algorithmus unterschiedlich lange Verarbeitungszeiten haben.

Im Folgenden wird, wie dargestellt, von einer zweistufigen Zertifizierungskette ausgegangen, um mögliche Optimierungen zu beschreiben.

Dabei wird ebenfalls davon ausgegangen, dass das Wurzelzertifikat, das zur Überprüfung notwendig ist, im Zertifikatsstore eines Gerätes vorliegt.

Im oben gezeigten Beispiel werden zur Zertifikatsüberprüfung:
- 2 digitale Signaturen von Zertifikaten geprüft (Issuing CA1 und End Entity Zertifikat)
- 2 digitale Signaturen der CRL oder der OCSP Response geprüft

Das Ergebnis von in kürzeren Zeitabständen wiederholten Zertifikatsüberprüfung wird typischerweise von zwei Hauptfaktoren abhängen:
- Revokationsstatus des Zertifikats oder eines Zertifikates aus dem Zertifizierungspfad
- Auslaufen der Gültigkeit des Zertifikates oder eines Zertifikates in der Zertifizierungskette des Zertifikates.

Nimmt man bestimmte Randbedingungen für die Änderung der Werte für ein Revokationsstatusupdate und der Gültigkeit eines Zertifikates an lässt sich die Überprüfung des End-Zertifikates optimieren:
Im Folgenden wird erläutert, auf welche Weise ein einem Nutzerzertifikat zugeordneter Datensatz in dem Speicher 4 in der Datenstruktur 5 angelegt werden kann:
Die folgende Tabelle 1 (Hash-Werte sind basierend auf SHA-1 bestimmt) illustriert beispielhaft einen Datensatz 7, der dem Nutzerzertifikat 3 zugeordnet ist.

**Tabelle 1:**

| Zertifikat | ZertifikatsFingerabdruck | Revokationsstatusaktualisierungsdatum | Gültigkeitsenddatum | Signatur + Erweiterungen (1= okay) |
|---|---|---|---|---|
| Endentität (EE) | f457e2642a67cd3 4125d594c047f25 49c57b4f | 2022-12-16T00:00:03 .000Z | 2023-01-16T00:00:01 .000Z | 1 |
| Aussteller CA1 | 42cd60e349f1d71c 427ab619d7664bff 5c63b28f | 2022-12-16T00:00:02 .000Z | 2023-02-16T00:00:01 .000Z | 1 |

Die Tabelle 1 umfasst die Felder Zertifikatsfingerabdruck, Revokationsstatusaktualisierungsdatum, Gültigkeitsenddatum und Überprüfungsergebnis von Signatur und/oder Erweiterungen. Jede Zeile in der Tabelle 1 betrifft eines der Zertifikate 3 bzw. 13 in dem Zertifikatspfad 20 ohne das Wurzelzertifikat 12. Dabei entspricht die End-Entität dem Nutzerzertifikat 3 und der Aussteller CA1 entspricht dem Ausstellerzertifikat 13.

In Tabelle 1 sind für alle Felder, insbesondere für die Felder Revokationsstatusaktualisierungsdatum und Gültigkeitsenddatum Werte eingetragen. Hierbei ist zu beachten, dass der Revokationsstatus von Zertifikaten eine bestimmte Gültigkeit hat und somit eine Aktualisierung des Revokationsstatus notwendig ist, nämlich zum Revokationsstatusaktualisierungsdatum. Die Tabelle 1 kann zum Beispiel von der Überprüfungsvorrichtung 1 gebildet werden. Diese Informationen können für jedes Zertifikat im Zertifikatspfad 20 vorgehalten werden. Wird nunmehr ein Zertifikat empfangen, kann einfach festgestellt werden, ob eine erneute Prüfung notwendig ist. Ist keine Prüfung notwendig, so können die oben genannten vier Signaturverifikationen vermieden werden.

Tabelle 1 kann als eine Datenstruktur mit einem dem Benutzerzertifikat 3 bezogenen Datensatz angesehen werden. Es müssen jedoch nicht für alle Felder, insbesondere nicht für die Felder Revokationsstatusaktualisierungsdatum und Gültigkeitsenddatum Werte in dem Datensatz 7 gespeichert werden. Für Zertifikate, die typischerweise nach dem Schalenmodell ausgestellt wurden, ist die Gültigkeit des jeweiligen ausstellenden Zertifikats länger als die des ausgestellten Zertifikats. Diese Tatsache kann ausgenutzt werden, um eben nicht für jedes Feld einen Wert zu speichern, wie in der folgenden Tabelle 2 illustriert ist.

**Tabelle 2:**

| Zertifikat | ZertifikatsFingerabdruck | Revokationsstatusaktualisierungsdatum | Gültigkeitsenddatum | Signatur + Erweiterungen (1= okay) |
|---|---|---|---|---|
| Endentität (EE) | f457e2642a67cd3 4125d594c047f25 49c57b4f | 2022-12-16T00:00:03 .000Z | 2023-01-16T00:00:01 .000Z | 1 |
| Aussteller CA1 | 42cd60e349f1d71c 427ab619d7664bff 5c63b28f | 2022-12-16T00:00:02 .000Z | Muss nicht gespeichert werden da > als Gültigkeitsenddatum der EE | 1 |

Hierbei ist für den Aussteller bzw. die Ausstellerbehörde CA1 zum Beispiel kein Wert für das Gültigkeitsenddatum gespeichert, da dieses Gültigkeitsenddatum später ist als die Gültigkeit der End-Entität, d.h. des Nutzerzertifikats 3.

Ist keine Prüfung notwendig, so können die oben vier Signaturverifikationen vermieden werden. Zusätzlich kann die Speicherung eines Zeitstempels vermieden werden.

Gespeicherte Werte in der Datenstruktur 7 können weiter reduziert werden. Wird zum Beispiel bei der initialen Überprüfung des Zertifikats festgestellt, dass die Gültigkeit des Zertifikats über die Zeit der nächsten Aktualisierung der Revokationsinformation hinausgeht, kann auch hier optimiert werden und auf ein Speichern der Gültigkeit verzichtet werden, wie in der folgenden Tabelle 3 illustriert ist.

**Tabelle 3:**

| Zertifikat | Zertifikats-Fingerprint | Revokationsstatusaktualisierungsdatum | Gültigkeitsenddatum | Signatur + Erweiterungen (1= okay) |
|---|---|---|---|---|
| Endentität | f457e2642a67cd3 4125d594c047f25 49c57b4f | 2022-12-16T00:00:03 .000Z | Muss nicht gespeichert werden da > als Revokationsstatusaktualisierungsdatum | 1 |
| Aussteller CA1 | 42cd60e349f1d71c 427ab619d7664bff 5c63b28f | 2022-12-16T00:00:02 .000Z | Muss nicht gespeichert werden da > als Revokationsstatusaktualisierungsdatum | 1 |

Hierbei ist kein Wert für das Gültigkeitsenddatum der End-Entität gespeichert, da dieses Gültigkeitsenddatum später ist als das Revokationsstatusaktualisierungsdatum.

Ist keine Prüfung notwendig, können die oben genannten vier Signaturverifikationen vermieden werden. Zusätzlich kann in der Tabelle die Speicherung der beiden Zeitstempel vermieden werden.

Tabelle 2 oder Tabelle 3 sind Beispiele von dem Nutzerzertifikat 3 bezogenen Datensätzen, die zum Beispiel in dem Speicher 4 gespeichert werden können. Die Beispiele der verschiedenen Tabellen zeigen, wie die Verarbeitungszeit bei der wiederholten Überprüfung von Zertifikaten reduziert werden kann. Dazu kann eine der oben dargestellten Tabellen aufgebaut bzw. angelegt werden und in dem Speicher 4 gespeichert werden. Diese Datensätze können dann bei der Verifikation des Nutzerzertifikats benutzt werden. Damit können bei der Überprüfung die Zahl der notwendigen Signaturverifikationen drastisch reduziert werden. Zusätzlich kann der notwendige Speicher für die Tabelle optimiert werden.

Die folgende Tabelle 4 zeigt ein weiteres Beispiel wie der auf das Nutzerzertifikat 3 bezogene Datensatz 7 aufgebaut sein kann.

**Tabelle 4:**

| Zertifikat | ZertifikatsFingerabdruck | Revokationsstatusaktualsierungsdatum | Gültigkeitsenddatum | Signatur + Erweiterungen (1= okay) |
|---|---|---|---|---|
| Endentität (EE) | f457e2642a67cd3 4125d594c047f25 49c57b4f94 | 2022-12-16T00:00:03 .000Z | 2023-01-16T00:00:01 .000Z | 1 |
| Aussteller CA3 | 44627648b864d1ee 58611a9642f84126 3a918f2a | 2022-12-16T00:00:02 .000Z | Muss nicht gespeichert werden da > als Gültigkeitsenddatum der EE | 1 |
| Aussteller CA2 | 38720d699bf380e8 f431cf4504a96227 82cd18e0 | 2022-12-16T00:00:02 .000Z | Muss nicht gespeichert werden da > als Gültigkeitsenddatum des EE | 1 |
| Aussteller CA1 | 42cd60e349f1d71c 427ab619d7664bff 5c63b28f | 2022-12-16T00:00:02 .000Z | Muss nicht gespeichert werden da > als Gültigkeitsenddatum des EE | 1 |

In dem in Tabelle 4 illustrierten Beispiel wird angenommen, dass drei Ausstellerbehörden (CA1, CA2, CA3) zwischen der End-Entität, d.h. Nutzerzertifikat 3, und dem Wurzelzertifikat 12 liegen. Hierbei sind keine Werte für das Gültigkeitsenddatum für die Aussteller CA1, CA2, CA3 gespeichert, da diese sämtlich später sind als die Gültigkeit der End-Entität.

In der folgenden Tabelle 5 sind beispielhaft zwei End-Entitäten EE1, EE2 aufgeführt, welche dieselbe Ausstellerbehörde CA1 haben.

**Tabelle 5:**

| Zertifikat | ZertifikatsFingerabdruck | Revokationsstatusaktualisierungsdatum | Gültigkeitsenddatum | Signatur + Erweiterungen (1= okay) |
|---|---|---|---|---|
| Endentität (EE) | f457e2642a67cd3 4125d594c047f25 49c57b4f | 2022-12-16T00:00:03 .000Z | Muss nicht gespeichert werden da > als Gültigkeitsenddatum | 1 |
| Endentität2 (EE2) | 3ccde6df46d8e246 43da2f75193c34fe 01324b84 | Muss nicht gespeichert werden da >= als Gültigkeitsenddatum der EE2 | 2022-12-16T00:00:03 .000Z | 1 |
| Aussteller CA1 | 42cd60e349f1d71c 427ab619d7664bff 5c63b28f | 2022-12-16T00:00:02 .000Z | Muss nicht gespeichert werden da > als Gültigkeitsenddatum | 1 |

Für die End-Entität EE ist kein Wert für das Gültigkeitsenddatum gespeichert, da dieses später ist als das Revokationsstatusaktualisierungsdatum. Für die End-Entität EE2 hingegen ist kein Wert für das Revokationsstatusaktualisierungsdatum gespeichert, da dieses größer ist als oder gleich ist wie das Gültigkeitsenddatum der End-Entität EE2.

Tabellen 4 und 5 repräsentieren weitere Beispiele von Datensätzen, die in dem Speicher 4 gespeichert werden können, um zum Beispiel ein einziges Nutzerzertifikat oder auch zwei verschiedene Nutzerzertifikate zu überprüfen.

Die oben illustrierten Beispiele für Datensätze, wie sie in den Tabellen 1 bis 5 aufgelistet sind, können synchron oder auch asynchron erstellt und/oder aktualisiert werden. Dabei kann zum Beispiel eine Hintergrundaktualisierung der jeweiligen Datensätzen bzw. der Tabellen erfolgen, auch wenn keine Kommunikation mit einem anderen Gerät stattfindet.

Die Verifikation einer digitalen Signatur ist eine aufwendige kryptografische Berechnung. Dahingegen ist die Berechnung eines Fingerabdrucks wesentlich weniger aufwendig. Damit existiert ein Vorteil, in der Tabelle oder allgemein in dem Datensatz 7 den Fingerabdruck als einen Identifikator zu benutzen oder insbesondere als ein Look-Up für Zertifikate zu nutzen. So können darüber potentielle Änderungen eines Zertifikats (als solches) festgestellt werden.

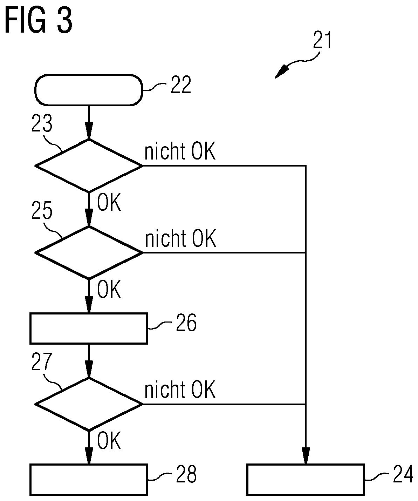

**Fig. 3** illustriert ein Ablaufdiagramm 21 als ein Teil eines Verfahrens zum Überprüfen eines Zertifikats gemäß einer Ausführungsform der vorliegenden Erfindung. In einem Verfahrensblock 22 wird ein Zertifikat empfangen. In einem Überprüfungsschritt 23 wird die Signatur des empfangenen Zertifikats überprüft. Die Signaturüberprüfung oder -verifikation erfordert das Zertifikat der ausstellenden Behörde. Falls die Überprüfung scheitert, wird in dem Verfahrensschritt 24 ein Fehler ausgegeben. Falls die Verifikation in dem Verifikationselement 23 positiv verläuft, wird in das Überprüfungselement 25 übergeleitet, in dem der Inhalt des Zertifikats verifiziert wird. Die Inhaltsverifikation des Zertifikats erfordert eine Sicherheitspolitik, Benamungsinformation und Zeitinformation als Passungskriterien.

Wenn die Verifikation im Element 25 scheitert, wird wiederum zu dem Fehlerelement 24 verzweigt. Falls die Verifikation positiv verläuft, wird zu dem Verfahrensschritt 26 weitergeleitet. In dem Verfahrensschritt 26 wird Revokationsstatusinformation geholt, zum Beispiel über eine CRL bzw. über OCSP. In dem Überprüfungselement 27 wird die Revokationsstatusinformation verifiziert. Dabei erfordert die Verifikation des Revokationsstatus eine Verbindung mit einem Server, welcher Revokationsinformation bereitstellt (entweder CRL oder OCSP), welche wiederum signiert ist. Die Signatur der Revokationsstatusinformation wird somit auch überprüft.

Wenn die Verifikation in Element 27 scheitert, wird wieder zu dem Fehlerelement 24 verzweigt. Wenn die Verifikation in Element 27 positiv verläuft, wird ein dem Nutzerzertifikat bezogener Datensatz angelegt oder zumindest ein dem Benutzerzertifikat bezogener Eintrag angelegt und zwar in dem Verfahrensschritt 28. Der Eintrag umfasst:
- den Fingerabdruck des Zertifikats,
- das Revokationsstatusaktualisierungsdatum (entweder mit CRL oder OCSP), wenn dieses jünger ist als das Gültigkeitsenddatums
- das Gültigkeitsenddatum des Zertifikats wird gespeichert, wenn dieses kürzer oder jünger ist als das Revokationsstatusaktualisierungsdatum
- Ferner wird das Verifikationsergebnis gespeichert.

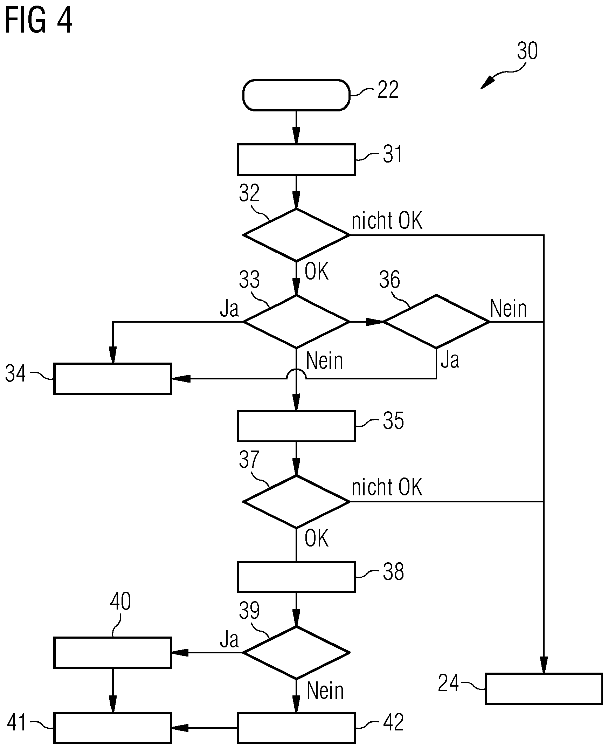

**Fig. 4** illustriert ein Ablaufdiagramm 30 als einen Teil eines Überprüfungsverfahrens gemäß einer Ausführungsform der vorliegenden Erfindung. In dem Verfahrensschritt 22 wird ein Zertifikat empfangen. In dem Verfahrensschritt 31 wird der Fingerabdruck des Zertifikats berechnet. Im Abfrageelement 31 wird die in dem Speicher möglicherweise gespeicherte Datenstruktur 5 mit Hilfe des Fingerabdrucks abgefragt. Falls ein Eintrag in der Tabelle 4 fehlt für den vorgelegten Fingerabdruck, wird ein Fehler in dem Fehlerelement 24 ausgegeben (insbesondere im Falle eines zweiphasigen Ansatzes mit Anlernphase und Nutzungsphase).

In anderen Ausführungsformen könnte in Element 24 eine Meldung ausgegeben werden, dass ein Zertifikatseintrag nicht gefunden wurde und daher ein neuer Eintrag erzeugt wird. Das kann insbesondere in einem dynamischen Umfeld sinnvoll sein, in dem unbestimmt neue Zertifikate benutzt werden können.

Wenn die Tabelle einen über den Fingerabdruck identifizierten Eintrag enthält, wird in das Überprüfungselement 33 verzweigt. In dem Überprüfungselement wird überprüft, ob die Empfangszeit (des Zertifikats) jünger ist als das Revokationsstatusaktualisierungsdatum. Wenn dies der Fall ist, wird in das Element 34 verzweigt. In Element 34 wird die positive Überprüfung des Zertifikats bestätigt.

Wenn die Überprüfung in Element 33 zu einem negativen Ergebnis führt, wird in das Element 35 verzweigt. Falls das Tabellenfeld Revokationsstatusaktualisierungsdatum keinen Wert enthält, wird von dem Element 33 zum Element 36 verzweigt. In Element 36 wird überprüft, ob die Empfangszeit vor oder nach dem Gültigkeitsenddatum des Zertifikats liegt. Wenn die Empfangszeit vor dem Gültigkeitsenddatum liegt oder gleich ist, wird wiederum in Element 34 verzweigt, so dass das Zertifikat als positiv überprüft bestätigt wird.

Wenn die Empfangszeit nach dem Gültigkeitsenddatum liegt, wird wiederum in das Fehlerelement 24 verzweigt, d.h. das Zertifikat wird als nicht gültig angesehen.

In dem Element 35 wird eine Revokationsinformation geholt oder abgefragt, entweder über CRL oder OCSP. Daraufhin wird in das Element 37 weitergeleitet, in dem das Zertifikat gegen die neue Revokationsliste verifiziert wird. Wenn dies scheitert, d.h. das Zertifikat widerrufen ist, wird wiederum in das Fehlerelement 24 verzweigt. Wenn das Zertifikat nicht in der neuen Revokationsliste gemäß der Überprüfung in Element 37 enthalten ist, wird in Element 38 weitergeleitet. In Element 38 wird das Gültigkeitsenddatum des Zertifikats gelesen.

In dem weiteren Überprüfungselement 39 wird überprüft, ob die nächste notwendige Revokationsinformationserneuerung vor dem Ende der Gültigkeit des Zertifikats liegt. Ist dies der Fall, wird in Element 40 verzweigt. In Element 40 wird das Feld des Revokationsstatusaktualisierungsdatums in dem Datensatz 7 aktualisiert und zwar auf das neue, wie es durch die akzeptierte Sicherheitspolitik vorgegeben ist.

Daraufhin wird in Element 41 weitergeleitet, in welchem das Zertifikat als positiv überprüft bestätigt wird. Ist jedoch die Erneuerung der Revokationsinformation nicht vor dem Ende der Gültigkeit des Zertifikats, wird in das Element 42 verzweigt. In Element 42 wird das Gültigkeitsenddatum bzw. der Wert für das Gültigkeitsenddatum in der Tabelle gespeichert und ferner wird der Wert für das Revokationsstatusaktualisierungsdatum in der Tabelle bzw. im Datensatz 7 gelöscht.

Ausführungsformen der vorliegenden Erfindung können zeitaufwendige Prüfungen bei wiederholten Zertifikatsvalidierungen bzw. -überprüfungen vermeiden. Das ist insbesondere bei Geräten mit Einschränkungen in der Rechenleistung von Vorteil. Aber auch für Geräte mit ausreichend Rechenleistung für die Zertifikatsvalidierung kann gemäß Ausführungsformen der vorliegenden Erfindung Vorteile erreicht werden, da damit die Latenz beim Reagieren auf neue Verbindungsaufbauwünsche reduziert werden kann. Die Erfindung hat keinen Einfluss auf die Interoperabilität.

## Patentansprüche

1. Überprüfungsvorrichtung (1) zur Überprüfung eines digitalen Zertifikats, aufweisend:
einen Eingang (2), der ausgebildet ist, um zumindest ein digitales Nutzerzertifikat (3) zu erhalten;
einen elektronischen Speicher (4), der ausgebildet ist, eine Datenstruktur (5) zu speichern; und
einen Prozessor (6), der ausgebildet ist:
das Nutzerzertifikat (3) zu überprüfen und in dem Speicher (4) einen Nutzerzertifikat bezogenen Datensatz (7) in der Datenstruktur (5) zur zukünftigen Überprüfung des Nutzerzertifikat anzulegen und/oder
auf einen angelegten Nutzerzertifikat bezogenen Datensatz (7) der Datenstruktur (5) zur aktuellen Überprüfung des Nutzerzertifikat (3) zuzugreifen und das Nutzerzertifikat mithilfe des Nutzerzertifikat bezogenen Datensatzes (7) zu überprüfen,
wobei der Nutzerzertifikat (3) bezogene Datensatz (7) zumindest teilweise über einen Identifikator (8) identifizierbar ist.

2. Überprüfungsvorrichtung gemäß dem vorangehenden Anspruch, wobei der Nutzerzertifikat bezogene Datensatz (7) einen Nutzerzertifikat bezogenen Eintrag aufweist, der über einen Identifikator des Nutzerzertifikates (3) auswählbar ist und einen Wert für zumindest eines der folgenden Felder aufweist:
ein Revokationsstatusaktualisierungsdatum des Nutzerzertifikats (3);
eine Gültigkeitsenddatum des Nutzerzertifikats (3);
ein Überprüfungsergebnis von Komponenten und Signatur und/oder Erweiterungen des Nutzerzertifikats (3).

3. Überprüfungsvorrichtung gemäß einem der vorangehenden Ansprüche, wobei der Nutzerzertifikat bezogene Datensatz einen Satz (7) von einem oder mehreren Ausstellern (CA1) bezogenen Einträgen aufweist, der bzw. die ein oder mehrere Ausstellerzertifikate eines Zertifikatspfades des Nutzerzertifikats betreffen, wobei ein Aussteller bezogener Eintrag über einen Identifikator des Ausstellerzertifikates auswählbar ist und einen Wert für zumindest eines der folgenden Felder aufweist:
ein Revokationsstatusaktualisierungsdatum des Ausstellerzertifikats;
ein Gültigkeitsenddatum des Ausstellerzertifikats;
ein Überprüfungsergebnis von Komponenten und Signatur und/oder Erweiterungen des Ausstellerzertifikats.

4. Überprüfungsvorrichtung gemäß einem der vorangehenden Ansprüche, wobei der Identifikator für den Nutzerzertifikat bezogenen Eintrag und/oder den Aussteller bezogenen Eintrag den digitalen Fingerabdruck des jeweiligen Zertifikats aufweist, wobei der digitale Fingerabdruck insbesondere mithilfe eines Hashalgorithmus berechnet wird.

5. Überprüfungsvorrichtung gemäß einem der vorangehenden Ansprüche, wobei nach Erhalten des Nutzerzertifikat zumindest eines der Folgenden ausgeführt wird:
Berechnen (31) des digitalen Fingerabdruckes;
Abfragen (32) der Datenstruktur (5) basierend auf dem Fingerabdruck;
bei erfolgreicher Abfrage:
Abrufen des Nutzerzertifikat bezogenen Datensatzes und Überprüfen des Nutzerzertifikats mithilfe des Nutzerzertifikat bezogenen Datensatzes;
bei nicht erfolgreicher Abfrage:
Überprüfen (23, 25, 27) des Nutzerzertifikats;
Anlegen (28) des Nutzerzertifikat bezogenen Datensatzes in der Datenstruktur.

6. Überprüfungsvorrichtung gemäß einem der vorangehenden Ansprüche, wobei beim Anlegen (28) des Nutzerzertifikat bezogenen Eintrags und/oder eines Ausstellerzertifikat bezogenen Eintrags:
kein Wert für das Gültigkeitsenddatum des jeweiligen Zertifikats gespeichert wird und der Wert für das Revokationsstatusaktualisierungsdatum des jeweiligen Zertifikats gespeichert wird, falls das Revokationsstatusaktualisierungsdatum des jeweiligen Zertifikats früher ist als das Gültigkeitsenddatum des jeweiligen Zertifikats; und/oder
kein Wert für das Revokationsstatusaktualisierungsdatum des jeweiligen Zertifikats gespeichert wird und der Wert für das Gültigkeitsenddatum des jeweiligen Zertifikats gespeichert wird, falls das Revokationsstatusaktualisierungsdatum des jeweiligen Zertifikats später ist als oder gleich ist wie das Gültigkeitsenddatum des jeweiligen Zertifikats.

7. Überprüfungsvorrichtung gemäß einem der vorangehenden Ansprüche, wobei beim Anlegen (28) des Nutzerzertifikat bezogenen Eintrags zumindest einer der folgenden Schritte ausgeführt wird:
Verifizieren (23) der Ausstellersignatur;
Verifizieren (25) des Zertifikatinhalts;
Erhalten und Verifizieren (26) von Revokationsinformationen mit Revokationsstatusaktualisierungsdatum;
Verifizieren (27) des Revokationsstatusaktualisierungsdatums,
Speichern eines Wertes für den Fingerabdruck des Nutzerzertifikat;
Speichern des Wertes für das Revokationsstatusaktualisierungsdatum, falls dieses früher ist als das Gültigkeitsenddatum des Nutzerzertifikats;
Speichern des Gültigkeitsenddatums des Nutzerzertifikats, falls diese früher ist als das Revokationsstatusaktualisierungsdatum;
Speichern des Verifikationsergebnisses.

8. Überprüfungsvorrichtung gemäß einem der vorangehenden Ansprüche, wobei das Überprüfen des Nutzerzertifikats mithilfe des Nutzerzertifikat bezogenen Datensatzes zumindest eines der Folgenden umfasst:
Überprüfen (33), ob ein Wert für das Revokationsstatusaktualisierungsdatum in dem Nutzerzertifikat bezogenen Eintrag enthalten ist;
falls ein Wert für das Revokationsstatusaktualisierungsdatum in dem Nutzerzertifikat bezogenen Eintrag enthalten ist, Überprüfen (33), ob die momentane Zeit früher ist als der Wert für das Revokationsstatusaktualisierungsdatum;
falls die momentane Zeit früher ist als der Wert für das Revokationsstatusaktualisierungsdatum, Bestätigung (34) der positiven Überprüfung des Nutzerzertifikats,
wobei diese Schritte insbesondere für jedes Ausstellerzertifikat in dem Zertifikatspfad durchgeführt werden,
wobei das Nutzerzertifikat positiv überprüft bestätigt wird, falls auch alle Ausstellerzertifikate positiv überprüft bestätigt sind.

9. Überprüfungsvorrichtung gemäß einem der vorangehenden Ansprüche, wobei das Überprüfen des Nutzerzertifikats mithilfe des Nutzerzertifikat bezogenen Datensatzes zumindest eines der Folgenden umfasst:
Überprüfen (33), ob ein Wert für das Revokationsstatusaktualisierungsdatum in dem Nutzerzertifikat bezogenen Eintrags enthalten ist;
falls kein Wert für Revokationsstatusaktualisierungsdatum in dem Nutzerzertifikat bezogenen Eintrags enthalten ist:
Abrufen des Wertes für das Gültigkeitsenddatum;
Überprüfen (36), ob die momentane Zeit früher ist als der Wert für das Gültigkeitsenddatum;
falls die momentane Zeit früher ist als der Wert für das Gültigkeitsenddatum, Bestätigung der positiven Überprüfung des Nutzerzertifikats,
wobei diese Schritte insbesondere für jedes Ausstellerzertifikat in dem Zertifikatspfad durchgeführt werden,
wobei das Nutzerzertifikats positiv überprüft bestätigt wird, falls auch alle Ausstellerzertifikate positiv überprüft bestätigt sind.

10. Überprüfungsvorrichtung gemäß einem der vorangehenden Ansprüche, ferner aufweisend, insbesondere falls die momentane Zeit später ist als der Wert für das Revokationsstatusaktualisierungsdatum:
Aktualisieren von Revokationsstatusinformation;
Aktualisieren, insbesondere synchron oder asynchron, des Datensatzes für das Nutzerzertifikat in der Datenstruktur.

11. Überprüfungsvorrichtung gemäß einem der vorangehenden Ansprüche,
wobei das Gültigkeitsenddatum angibt, bis zu welchem Datum das betreffende Zertifikat gültig ist,
wobei das Revokationsstatusaktualisierungsdatum angibt, zu welchem Datum neue Revokationsinformationen erforderlich/einzuholen sind,
wobei die Revokationsinformationen insbesondere durch über OCSP und/oder über Anfordern einer CRL erhalten werden.

12. Überprüfungsvorrichtung gemäß einem der vorangehenden Ansprüche, wobei das Nutzerzertifikat und/oder das Ausstellerzertifikat zumindest eins der folgenden Daten umfasst:
Zertifikatsname (CN);
Gültigkeitsinformation;
Informationen zur erlaubten Schlüsselbenutzung;
öffentlicher Schlüssel;
Ausstellersignatur,
wobei insbesondere ein Wurzelzertifikat im Speicher gespeichert ist und kein Eintrag dafür in der Datenstruktur gespeichert ist,
wobei das Nutzerzertifikat insbesondere ein X.509 Zertifikat umfasst.

13. Feldgerät (10), insbesondere Schutzgerät für ein Energieverteilungssystem, aufweisend eine Überprüfungsvorrichtung (1) gemäß einem der vorangehenden Ansprüche.

14. Überprüfungsverfahren einer Überprüfung eines digitalen Zertifikats, aufweisend:
Erhalten (22) zumindest eines digitalen Nutzerzertifikates;
Überprüfen (21) des Nutzerzertifikates und Anlegen (28) eines Nutzerzertifikat bezogenen Datensatzes in einer Datenstruktur zur zukünftigen Überprüfung des Nutzerzertifikat und/oder
Zugreifen auf einen angelegten Nutzerzertifikat bezogenen Datensatz (7) zur aktuellen Überprüfung des Nutzerzertifikat und Überprüfen des Nutzerzertifikates mithilfe des Nutzerzertifikat bezogenen Datensatzes,
wobei der Nutzerzertifikat bezogene Datensatz (7) zumindest teilweise über einen Identifikator (8) identifizierbar ist, wobei insbesondere die Datenstruktur in einem elektronischen Speicher einer Überprüfungsvorrichtung oder eines Feldgerätes gemäß einem der vorangehenden Ansprüche gespeichert ist.

15. Computerprogrammprodukt mit Anweisungen, das ausgebildet ist, wenn von einem Prozessor ausgeführt, ein Überprüfungsverfahren gemäß dem vorangehenden Anspruch ausführen.
